Europäisches Patentamt

European Patent Office

Office européen des brevets

(11) Numéro de publication : **0 504 067 A1**

# (12) DEMANDE DE BREVET EUROPEEN

(21) Numéro de dépôt : **92400674.5**

(51) Int. Cl.⁵ : **H04L 12/28**

(22) Date de dépôt : **13.03.92**

(30) Priorité : **15.03.91 FR 9103206**

(43) Date de publication de la demande :
**16.09.92 Bulletin 92/38**

(84) Etats contractants désignés :
**AT BE CH DE DK ES FR GB GR IT LI LU NL PT SE**

(71) Demandeur : **VITCOM**
**27 bis rue Sergent Godefroy**
**F-93100 Montreuil (FR)**

(71) Demandeur : **OFFICE PUBLIC D'HABITATIONS A LOYERS MODERES (O.P.H.L.M.) de la Ville de Clichy la Garenne**
**17 rue Villeneuve**
**F-92110 Clichy La Garenne (FR)**

(72) Inventeur : **Herellier, Jean-Marc**
**4 rue Denfert Rochereau**
**F-38000 Grenoble (FR)**
Inventeur : **Lucas, Marc**
**6 Villa Perreur**
**F-75020 Paris (FR)**
Inventeur : **Tripier, Marc**
**26 Impasse F. Poulenc**
**F-60600 Clermont (FR)**
Inventeur : **Vigoureux, Gilles**
**1 rue Victor Hugo**
**F-92230 Gennevilliers (FR)**

(74) Mandataire : **Keib, Gérard et al**
**Bouju Derambure (Bugnion) S.A. 38, avenue de la Grande Armée**
**F-75017 Paris (FR)**

(54) **Système et procédé domotique pour communiquer des informations dans des immeubles d'habitat collectif.**

(57)   Le sous-système de communication comprend au sein d'un poste central de gestion (CG), des moyens de traitement d'informations (5), des moyens centraux d'interface de vidéocommunication (30) reliés d'une part auxdits moyens de traitement d'information (5), et d'autre part, à des moyens individuels d'interface (13) situés dans chaque logement (50) et reliés chacun à un poste récepteur (12) équipant ledit logement, via un nombre prédéterminé de canaux de vidéocommunication dont un est dédié à une communication sélective d'informations personnalisées entre chaque logement (50) et le poste central de gestion (CG).

Les moyens individuels d'interface (13) sont agencés pour, d'une part, commander l'accès auxdites informations personnalisées sur ledit canal de vidéocommunication sélective et, d'autre part, émettre sur ledit canal des informations vers le poste central de gestion (CG).

Utilisation dans le domaine de la domotique appliquée à l'habitat collectif social ou privé et aux lotissements résidentiels.

EP 0 504 067 A1

FIG_1

La présente invention concerne un procédé de communication d'informations au sein d'au moins un ensemble de logements, notamment d'immeubles d'habitat collectif.

Elle vise également un système de communication pour sa mise en oeuvre et un système domotique comportant un tel système de communication.

Les organismes gestionnaires d'ensembles de logements, notamment d'immeubles d'habitat collectif sont de plus en plus confrontés à deux impératifs : d'une part, l'amélioration de la gestion de ces ensembles et en particulier la gestion des charges (chauffage, fluides) et des équipements communs en vue de limiter les coûts et d'autre part, la nécessité de disposer de supports de communication efficaces, fiables et peu coûteux à destination de l'ensemble des résidents, qu'ils soient locataires ou propriétaires. L'objectif est à la fois de contribuer à de meilleures conditions de vie au sein de ces ensembles et à un accroissement de la convivialité et d'informer chaque résident de façon personnalisée et directe sur sa situation concernant ses consommations d'énergie et/ou de fluides et le réglement de ses charges.

Les supports de communication actuellement les plus utilisés sont les documents écrits - notes d'information, journaux internes - qui présentent un coût de réalisation et de distribution élevé et sont souvent noyés dans une masse considérable de documents publicitaires, avec le risque de ne pas être lus par les résidents concernés.

Il existe aussi de façon plus limitée des expériences d'utilisation de terminaux vidéotexte, de type minitel sur le réseau téléphonique public, à partir d'un centre serveur dédié spécifiquement à cette mission de communication. Ce type de support nécessite, pour que les coûts d'exploitation soient acceptables, qu'un très grand nombre de résidents utilise ce service. Cette solution se heurte en outre au fait que le taux d'équipement des logements en terminaux vidéotexte est encore faible, tout particulièrement dans les logements appartenant à des ensembles locatifs à loyer modéré.

De même, l'utilisation du téléphone pour la communication d'informations générales ou personnalisées présente de multiples inconvénients parmi lesquels le souci légitime de nombreux résidents de ne pas être importunés par des appels non souhaités ou encore le coût élevé et le caractère aléatoire d'une communication massive d'informations.

Les supports actuels de communication présentent donc de nombreux inconvénients alors que parallèlement on assiste à un développement considérable des réseaux câblés de télédistribution qui concernent autant les programmes immobiliers nouveaux que les parcs de logement existants.

On connaît déjà, d'après le document "PROCEEDINGS OF LOCALNET '83 (EUROPE), LOCAL NETWORKS - STRATEGY AND SYSTEMS, ONLINE", mars 1983, pages 239-249, Londres, GB ; J. MAZUTIS et al.; "COMNET : A broadband voice, video and data network for the Canadian House of Commons", un réseau de communication de données, son et vidéo à large bande, mettant en oeuvre des techniques coaxiales dans une configuration étoile. Le système décrit comprend notamment des fonctions de messagerie locale, de réseau local en circuit fermé et de gestion d'énergie, mais ne suggère pas une interactivité entre le poste central de gestion et des postes récepteurs dotés de moyens individuels d'interface.

Par ailleurs, on connaît d'après le document "IEEE TRANSACTIONS ON CONSUMER ELECTRONICS", vol. 34, n° 2, mai 1988, pages 327-333, New York, NY, US ; R. HAMABE et al.; "System design of super home bus system (S-HSB) for apartment building", un système domotique destiné à des immeubles d'habitat collectif, utilisant des câbles coaxiaux sur lesquels transitent selon la norme S-HBS, des signaux numériques et analogiques en mode multiplexé. Ce système comprend effectivement un sous-système de communication, mais ce document ne décrit pas de mode de transmission d'informations ou de messages émis par un résident vers le poste central de gestion, mettant en oeuvre des moyens individuels d'interface.

Enfin, dans le document P. BRUN et al.; "La domotique", première édition, Octobre 1988, pages 40-43, Presses Universitaires de France, Paris, FR, il est décrit très succinctement l'état de l'art dans le domaine des bus domotiques, et notamment le concept de tableau de bord domestique. Ce document décrit effectivement le principe de télégestion d'un ensemble de logements et la transmission d'informations personnalisées, mais ne fournit aucun enseignement sur la mise en oeuvre de moyens individuels d'interface et de moyens de commande pour transmettre des informations au poste central de gestion.

Dans les systèmes de communication divulgués dans les documents cités, les seules situations où sont envisagées des transferts d'information depuis un logement vers un poste central de gestion concernent les applications de téléalarme et de télédétection pour lesquelles des moyens de génération d'information sont classiquement mis en oeuvre. Cependant aucun enseignement n'est donné dans l'art antérieur s'agissant d'un mode interactif utilisant le seul canal de vidéocommunication sélective. Au contraire, il est de règle de réserver des canaux spécifiques pour la transmission de signaux d'alarme ou de télédétection, et l'homme de métier est généralement dissuadé de confondre les canaux de transmission vidéo et les canaux de transmission de télédétection afin d'assurer un niveau maximal de sécurité et de limiter tout risque d'interférence, même si le support physique, à savoir le bus domotique, peut être commun.

Le but de la présente invention est de remédier à ces inconvénients en proposant un système domotique au sein d'au moins un ensemble de logements, notamment un immeuble ou un ensemble d'immeubles d'habitat collectif, comprenant un système de communication interactive comportant, au sein d'un poste central de gestion, des moyens de traitement d'informations et des moyens centraux d'interface de vidéocommunication reliés, d'une part, auxdits moyens de traitement d'information et, d'autre part, via des moyens internes de liaison de vidéocommunication, à des moyens supportant un nombre prédéterminé de canaux de vidéocommunication parmi lesquels un canal dédié à la communication sélective d'informations entre le poste central de gestion et chaque logement.

Suivant l'invention, les moyens individuels d'interface comprennent des moyens de commande opérables par le résident d'un logement, et sont agencés pour, d'une part, commander l'accès auxdites informations personnalisées sur ledit canal de vidéocommunication sélective, et d'autre part, émettre sur ledit canal des informations vers le poste central de gestion, notamment des messages en réponse à une demande provenant du poste central de gestion.

Le système domotique selon l'invention permet non seulement d'assurer une communication de données et d'informations personnalisées à destination d'un ensemble de logements, mais également de générer, depuis chaque logement relié à ce système, des messages à destination du poste central de gestion. Dans les systèmes de communication de l'art antérieur organisés autour de canaux de vidéocommunication, les utilisateurs ne disposent en général que d'un boîtier de télécommande qui a pour fonctions principales de sélectionner un canal parmi l'ensemble des canaux accessibles et de régler à distance l'ensemble des paramètres du poste récepteur. Dans le système selon l'invention, la communication entre le poste central de gestion et chaque logement équipé devient de fait interactive via les moyens individuels d'interface qui sont donc équipés pour permettre à un résident de générer de messages, notamment en réponse à une demande émanant du poste central de gestion, en frappant, par exemple, les touches du clavier d'un dispositif de télécommande approprié. Le support de communication reste le canal de vidéocommunication sélective.

Suivant un autre aspect de l'invention, il est proposé un procédé de communication d'informations au sein d'au moins un ensemble de logements, notamment un ou plusieurs immeubles d'habitat collectif, chaque logement étant relié à un réseau câblé de télédistribution donnant accès à un nombre prédéterminé de canaux de vidéocommunication et étant équipé d'un poste récepteur connecté audit réseau, mis en oeuvre dans le système domotique selon l'invention, caractérisé en ce qu'il comprend des séquences de communication d'informations personnalisées aux résidents en réponse à une demande de ceux-ci et des séquences de transmission par chaque résident d'informations, notamment de messages, sur le canal de vidéocommunication sélective, à destination du poste central de gestion.

Selon une caractéristique avantageuse de l'invention, les informations personnalisées communiquées sont issues d'une étape préalable de traitement au niveau du poste central de gestion, soit des données de comptage acquises au cours d'étapes de relevé de compteurs situés en des points prédéterminés des ensembles de logements, notamment des immeubles, et associés chacun à un logement, soit d'informations spécifiques émises soit par un service gestionnaire des logements situé à distance desdits ensembles, soit par un opérateur au niveau du poste central de gestion.

Ainsi, des traitements qui étaient auparavant effectués à distance par le service gestionnaire, avec pour conséquence des lenteurs et des coûts plus élevés dûs à la transmission des résultats, sont décentralisés et sont effectués directement au niveau du poste central de gestion situé dans un des ensembles de logements, par exemple, le relevé des compteurs et le traitement des données de comptage. En outre, une grande souplesse d'utilisation du procédé selon l'invention est assurée par le fait que des messages peuvent être transmis soit localement, soit à distance.

Le système selon l'invention combine les prestations offertes par le procédé de communication précité, en particulier la disponibilité et la fiabilité des supports de communication ainsi que l'adressabilité des logements, avec les avantages d'une véritable centrale de téléalarme et de détection en termes de sécurité active des biens et des personnes, sachant que les unités de traitement et de surveillance sont situées dans le même poste central de gestion et que les liaisons respectives de vidéocommunication et de détection partagent une gaine commune, avec pour effet une rationalisation des installations et une diminution corrélative des coûts.

D'autre particularités et avantages de l'invention apparaîtront encore dans la description ci-après. Aux dessins annexés donnés à titre d'exemples non limitatifs :

    – la figure 1 est un schéma synoptique d'une forme de réalisation d'un système démotique selon l'invention ;

    – la figure 2 illustre les différentes liaisons mise en oeuvre entre un logement, le poste central de gestion et des systèmes de communication extérieurs, avec le procédé selon l'invention mis en oeuvre dans un immeuble ;

    – la figure 3 est un schéma-bloc des différentes fonctions relatives au traitement des données de comptage, dans le procédé selon l'invention ;

    – la figure 4 est un schéma-bloc des fonctions relatives à la réception et à la mise en forme des données au niveau du poste central de gestion ;
– la figure 5 illustre un exemple d'agencement intérieur d'un poste central de gestion associé à un système de communication selon l'invention ;
– la figure 6 est un schéma rassemblant les fonctions réalisées grâce au procédé de communication selon l'invention, au niveau respectivement d'un logement, du poste central de gestion et d'un service gestionnaire.

On va maintenant décrire une forme préférée de mise en oeuvre du procédé selon l'invention en même temps que le système pour sa mise en oeuvre, appliquée à titre d'exemple, à un immeuble d'habitat collectif.

Il est à noter au préalable que l'on entend par fluides, l'eau froide, l'eau chaude et par énergies, l'énergie électrique et l'énergie thermique (chauffage) fournie par circulation d'eau chaude.

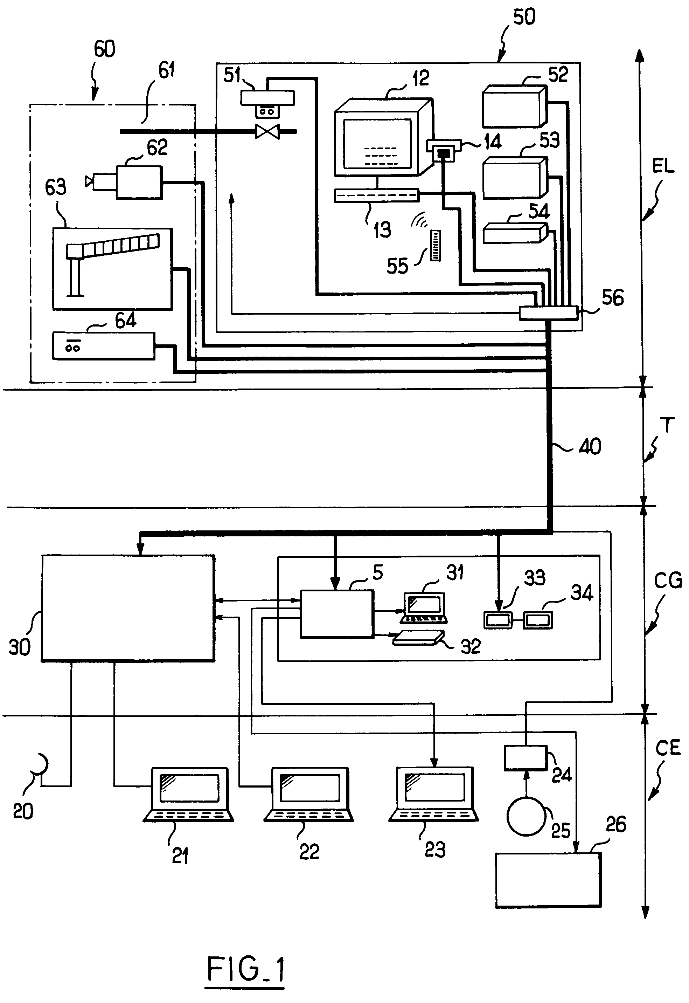

Le système domotique représenté sous la forme du schéma synoptique de la figure 1 est constitué de quatre parties : une partie EL relative à l'équipement domotique de chaque logement 50 d'un immeuble et à l'équipement des parties communes 60 de cet immeuble, une partie T constituée par l'ensemble des liaisons de toutes natures (communication, détection, commande) aboutissant aux logements et parties communes, une partie CG comprenant un poste central de gestion relié aux logements et équipements communs par la partie T qui constitue un média domotique, et une partie CE de communication extérieure qui regroupe l'ensemble des supports de communication reliés au poste central de gestion CG.

Chaque logement 50 est équipé d'un poste récepteur de télévision 12 auquel sont associés un boîtier multifonction 13 et une unité de télécommande 55, d'un ou plusieurs dispositifs de comptage 51 d'énergie ou de fluides dans une canalisation 61, éventuellement d'un téléphone 14 et de dispositifs de détection d'incendie 52, d'effraction 53 ou de détresse 54 portables ou fixes. L'ensemble des dispositifs précités est relié à un bornier individuel 56 situé par exemple au niveau de la plinthe du logement 50 et relié à une gaine domotique 40 regroupant l'ensemble des liaisons de communication et de détection. Les parties communes 60 de l'immeuble peuvent être équipées de caméras de vidéosurveillance 62, de dispositifs de contrôle d'accès 63 à un parking et d'alarmes techniques relatives par exemple à la détection de fumée, d'inondation ou au disfonctionnement d'équipements de chauffage ou de climatisation. L'ensemble de ces équipements et les dispositifs compris dans les logements sont reliés via la gaine domestique 40 au poste central de gestion CG qui comprend notamment une interface centrale de vidéocommunication 30, une unité centrale de gestion domotique 5 associée à un poste de travail 31 et à une imprimante 32 et une unité de vidéosurveillance comprenant par exemple un moniteur 33 et un magnétoscope 34. L'interface centrale de vidéocommunication 30 est reliée d'une part au réseau câblé de télédistribution 20 et à des terminaux vidéotexte, par exemple un terminal vidéotexte 21 dépendant du service gestionnaire des immeubles et un terminal vidéotexte 21 dépendant de services municipaux, via des lignes téléphoniques spécialisées ou via le réseau téléphonique autocommuté, et d'autre part, à l'unité centrale 5 et aux borniers individuels 56 des différents logements pour la transmission des canaux de vidéocommunication. L'unité centrale 5 est reliée par liaison informatique à un terminal 23 affecté aux opérations de maintenance, de dépannage ou de prestation technique et à des moyens de traitement informatique 26 du service gestionnaire. On peut ainsi prévoir un accès par téléphone depuis chaque logement à un réseau numérique à intégration de service (RNIS) 25 via une interface spécifique 24.

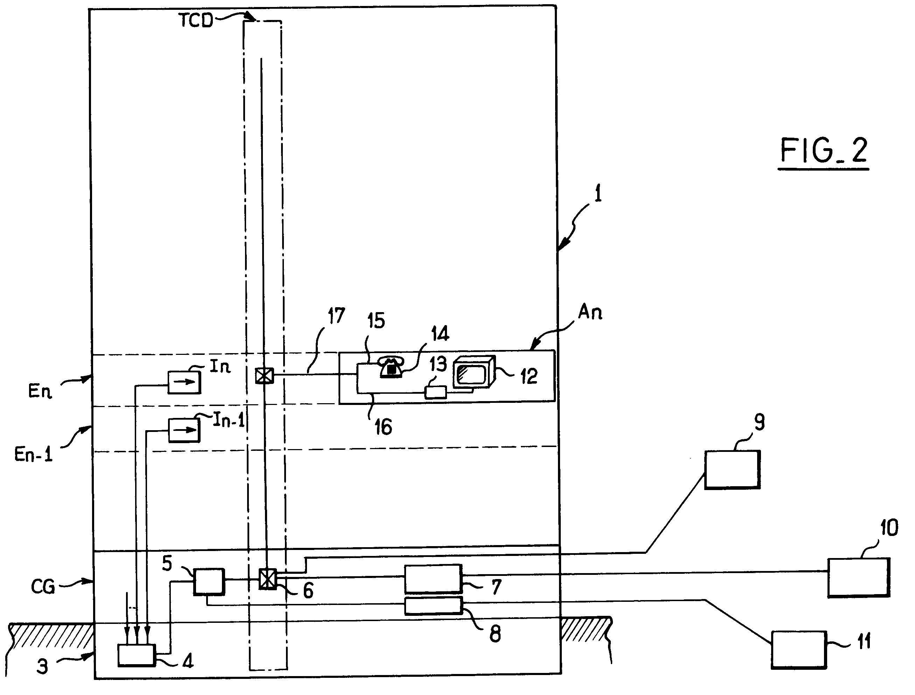

La localisation des différents composants du système de communication selon l'invention apparaît explicitement en figure 2 dans laquelle on a représenté schématiquement au sein d'un immeuble 1, à titre d'exemple, un niveau d'étage En et à ce niveau, un logement ou appartement An doté d'un téléphone 14, un poste récepteur 12 avec son boîtier multifonction associé 13, reliés via respectivement une liaison téléphonique 15 et une liaison domestique de vidéocommunication 16 et une liaison commune 17, à une liaison de communication domestique TCD qui irrigue l'ensemble des étages En, En-1 de l'immeuble 1 et est reliée à une interface centrale de vidéocommunication 6 dans le poste central de gestion CG situé dans un local affecté au régisseur de l'immeuble ou de l'ensemble d'immeubles. L'interface centrale 6 est reliée d'une part à l'unité centrale 5 et d'autre part, vers l'extérieur, au réseau câblé de télédistribution et à un réseau numérique à intégration de service 10 via une interface spécialisée 7.

A titre d'exemple, le réseau de vidéocommunication mis en oeuvre dans la réalisation décrite présente une architecture de type étoile dont le centre est constitué par le poste central de gestion CG.

Mais il est à noter que l'invention peut s'appliquer à tous types de réseaux de communication, notamment par bus, en anneaux ou en arbre.

L'unité centrale 5 est en communication d'une part, avec un dispositif concentrateur 4 de données situé dans un local technique 3 affecté comme local domotique dont elle reçoit des données de comptage et d'autre part, avec le service gestionnaire 11 situé à distance des immeubles via une interface de ligne, par exemple un modem, et une ligne téléphonique. Les informations émises par l'unité centrale 5 à destination d'un ou plusieurs logements transitent via l'interface centrale de vidéocommunication 6 et la liaison de communication domestique TCD.

Le dispositif concentrateur 4 reçoit l'ensemble des données de comptage délivrées par chaque dispositif de comptage In, In-1 associé à un logement.

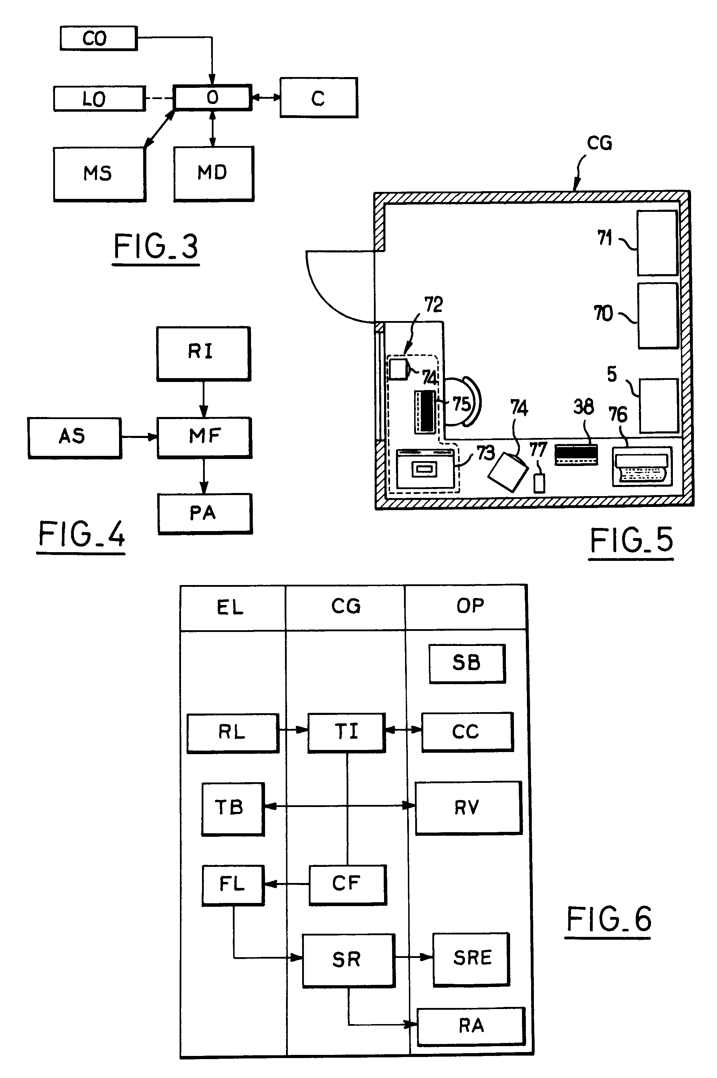

Selon la configuration de principe à la base de la communication des informations de comptage et des informations de type message, représentée en figure 3, un calculateur O qui comprend en l'occurrence l'unité centrale 5 reçoit des informations de comptage issues de compteurs CO et permet soit une mise à jour d'informations sur site MS, soit une mise à jour déportée MD, par exemple au moyen d'un terminal vidéotexte. Le calculateur O est relié à une unité de communication 5 et optionnellement à une unité gestionnaire LO.

Les quatre fonctions essentielles assurées au niveau du poste central de gestion pour le traitement des informations, représentées en figure 4, sont en premier lieu la réception d'informations RI en provenance par exemple des dispositifs de comptage via un concentrateur, et la prise en compte d'autres sources AS, par exemple, des unités de stockage ou d'archivage ou des bases de données. Les informations reçues, quelle que soit leur origine, sont soumises à une opération de mise en forme MF, en particulier pour réaliser des pages écran de format compatible avec une visualisation sur un poste récepteur de télévision. Les informations mises en forme sont ensuite transmises vers les prises d'abonnés PA.

Le poste central de gestion CG représenté en figure 5 rassemble l'ensemble des unités de traitement, de gestion, de communication et de surveillance du système domotique selon l'invention. Dans l'exemple d'agencement intérieur représenté, sont regroupés une unité 71 de traitement d'alarmes techniques, de contrôle d'accès et de sécurité, l'unité centrale de traitement et de gestion 5 associée à un poste de travail de gestion comportant un clavier 38, une imprimante 76, un appareil d'initialisation de badge 77 et un écran graphique 74, une unité de comptage 70 affectée à la compilation et au traitement des données de comptage et un poste de contrôle et de surveillance 72. Ce dernier comprend par exemple un moniteur de télévision 74, un clavier 75 et un magnétoscope 73. Le poste central de gestion CG ainsi équipé est de préférence situé dans le local du régisseur de l'immeuble ou du groupe d'immeubles dont la gestion principale est assurée par un service gestionnaire, par exemple un office public d'habitations à loyer modéré.

La répartition des tâches et opérations permises avec le procédé selon l'invention entre les trois niveaux opérationnels : -le logement, le poste central de gestion et le service gestionnaire-, est représentée en figure 6. Un avantage majeur procuré par l'invention est la possibilité de décentraliser une partie des traitements actuellement effectués par le service gestionnaire.

Au niveau du poste central de gestion CG, les moyens informatiques installés permettent le traitement TI des informations résultant des opérations de relevé de comptage, de messages entrés localement ou d'informations transmises depuis des sites extérieurs, les calculs de facturation CF relatifs aux fluides consommés et la saisie des réglements SR correspondant aux factures émises.

Au niveau de chaque logement EL, des opérations automatiques de relevé de compteur RL sont effectuées suivant la technique désormais bien connue des télérelevés ; un tableau de bord des consommations de fluide et/ou d'énergie TB apparaît sur l'écran du poste récepteur en réponse à une commande du résident utilisateur de ce poste qui reçoit du poste central de gestion une facture FL.

Le service gestionnaire OP a à sa charge la responsabilité de la saisie budgétaire SB, le contrôle de la cohérence CC des informations transmises par le poste central de gestion CG, la réception RV des valeurs de comptage alimentant les tableaux de bord de consommation transmis aux résidents, à des fins d'archivage et de statistique ainsi que les opérations relatives à la saisie des réglements, par exemple la saisie des réglements en espèce SRE ou la réception des autres formes de réglement RA. La mise en oeuvre du procédé selon l'invention se traduit concrètement par l'installation d'un logiciel de gestion et de communication au sein du microordinateur implanté dans le poste central de gestion CG.

On peut aussi prévoir que le service gestionnaire OP conserve une gestion centralisée de l'ensemble des informations et données concernant les logements gérés. Dans ce cas, ces données sont transmises depuis le poste central CG au service gestionnaire OP via des fichiers d'échanges normalisés, acceptables pour toute application.

On va maintenant décrire un mode concret d'utilisation pour un résident du système domotique et du système de communication selon l'invention, en référence à l'ensemble des figures 1 à 6 précitées.

Le boîtier multifonction 13 dont est doté chaque logement 50 permet au résident de sélectionner au moyen de la télécommande 55 l'un quelconque des canaux de vidéocommunication offerts par le réseau câblé de télédistribution 20 à la condition toutefois d'être détenteur de droits d'accès en vigueur pour les canaux à péage ou par abonnement. Lorsque le résident souhaite accéder aux informations émises par le poste central de gestion CG, il lui suffit de sélectionner le canal de communication sélective au moyen de la télécommande 55. Un menu d'accueil apparaît alors sur l'écran de son poste récepteur 12. Trois types d'informations lui sont proposées :

    – une boite à lettre de messages adressés par le gestionnaire de l'immeuble à partir, soit du poste central de gestion CG, soit du service gestionnaire à distance ;

    – la consultation des tableaux de bord TB des consommations personnelles d'eau et de chauffage ;
– la consultation d'informations générales accessibles à tous.

Les deux premiers types d'informations bénéficient d'un adressage sélectif, de champ réglable en ce qui concerne la boite à lettre (par appartement, par escalier, par bâtiment ou pour l'ensemble des bâtiments) ou strictement individuel s'agissant des tableaux de bord de consommation. En outre, l'accès à la boite à lettre est conditionnée à la présentation d'un mot de passe qui peut être à tout moment modifié par le résident.

Ce mot de passe est précisé et complété par le numéro du logement ou de l'appartement, ce qui permet à deux résidents d'avoir le même code d'accès sans qu'il y ait risque de confusion.

Le choix par le résident de l'une des options du menu d'accueil s'effectue par action sur des touches prédéterminées de la télécommande 55.

Le résident bénéficie en outre, avec le système domotique selon l'invention, des services rendus par une centrale de téléalarme et de télédétection, son logement étant directement relié à une unité d'alarme et de sécurité 71 implantée dans le poste central de gestion CG.

Les équipements communs 60 sont entièrement contrôlés depuis le poste central de gestion CG auquel revient la tâche de l'initialisation des badges de contrôle d'accès et la surveillance des locaux et des équipements.

Il est à noter que l'ensemble des composants et interfaces mis en oeuvre dans le système de communication et le système domotique selon l'invention correspond à des matériels standard et techniquement éprouvés. De même, les protocoles de vidéocommunication sont nécessairement ceux utilisés dans le réseau câblé de télédistribution qui irrigue l'ensemble des bâtiments équipés selon l'invention. Il en est de même pour les techniques de liaison informatique et téléphonique avec des sites extérieurs, qui sont bien connues de l'homme de métier. Les calculateurs utilisés dans l'unité centrale de gestion et dans l'unité de comptage sont de préférence des microordinateurs, par exemple de type compatible PC.

Bien sûr, l'invention n'est pas limitée aux exemples qui viennent d'être décrits et de nombreux aménagements peuvent être apportés à ces exemples sans sortir du cadre de l'invention.

On peut ainsi envisager d'autres types de détecteurs installés dans les logements. Le bornier individuel peut être implanté en d'autres endroits que la plinthe du logement. Les seules limitations au nombre de dispositifs contrôlés dans les parties communes et au nombre de compteurs sont liées la capacité de traitement de l'unité de comptage et de l'unité de gestion qui peut de toute façon être dimensionnée selon la taille de l'immeuble et le nombre de logements.

Par ailleurs, l'interface centrale de vidéocommunication peut bien sûr recevoir des canaux de télévision hertziens et en particulier être reliée à une antenne de réception satellite collective.

En outre, le procédé de communication selon l'invention n'est bien sûr pas limité à l'habitat collectif social mais peut aussi s'appliquer à des logements collectifs privés, à des lotissements résidentiels et plus généralement à tout programme immobilier.

## Revendications

1. Système domotique au sein d'au moins un ensemble de logements, un immeuble ou un ensemble d'immeubles d'habitat collectif, comprenant un sous-système de communication comprenant au sein d'un poste central de gestion (CG), des moyens de traitement d'informations (5), des moyens centraux d'interface de vidéocommunication (30) reliés d'une part auxdits moyens de traitement d'information (5), et d'autre part, via des moyens internes de liaison de vidéocommunication, à des moyens individuels d'interface (13) situés dans chaque logement (An, 50) et reliés chacun à un poste récepteur (12) équipant ledit logement, lesdits moyens internes de liaison de vidéocommunication supportant un nombre prédéterminé de canaux de vidéocommunication dont un est dédié à une communication sélective d'informations personnalisées entre chaque logement (An, 50) et le poste central de gestion (CG), caractérisé en ce que les moyens individuels d'interface (13) comprennent des moyens individuels de commande (55) opérables par le résident d'un logement (An, 50) et sont agencés pour, d'une part, commander l'accès auxdites informations personnalisées sur ledit canal de vidéocommunication sélective et, d'autre part, émettre sur ledit canal des informations vers le poste central de gestion (CG), notamment des messages en réponse à une demande provenant dudit poste central de gestion (CG).

2. Système domotique selon la revendication 1, caractérisé en ce qu'il comprend en outre un sous-système de détection individuelle comportant dans un nombre prédéterminé de logements des moyens individuels de détection, notamment d'incendie (52), d'affectation (53) ou de détresse (54), reliés via des moyens de liaison de détection, à une unité de surveillance (71) située dans le poste central de gestion (CG), lesdits moyens de liaison de détection étant inclus entre chaque logement relié et le poste central de gestion dans une gaine domotique (40) commune avec les moyens internes de liaison de vidéocommunication.

3. Système domotique selon l'une des revendications 1 ou 2, caractérisé en ce qu'il comprend en outre un sous-système de contrôle d'accès (63) à des équipements communs (60) et un sous-système d'alarmes techniques associées à des capteurs implantés dans lesdits équipements communs (60) et dans des locaux techniques, et en ce que les sous-systèmes de contrôle d'accès et d'alarmes techniques sont en communication avec une unité d'alarme technique et de contrôle d'accès (71) située dans le poste central de gestion via des moyens de liaison informatique qui sont partiellement inclus dans la gaine domotique.

4. Système domotique selon l'une des revendications précédentes, caractérisé en ce qu'il comprend en outre un sous-système de vidéosurveillance comprenant au moins une caméra vidéo implantée dans les équipements communs et reliée, via des moyens de liaison de vidéosurveillance partiellement inclus dans la gaine domotique (40), à une unité de vidéosurveillance (72) située dans le poste central de gestion (CG) et comprenant notamment un moniteur (74) et un magnétoscope (73).

5. Système domotique selon l'une des revendications précédentes, caractérisé en ce que les moyens internes de liaison de vidéocommunication présentent une architecture de type étoile dont le centre est constitué par les moyens centraux d'interface (30) et dont chaque bras aboutit à un logement ou à un ensemble de logements.

6. Système domotique selon l'une des revendications précédentes, caractérisé en ce que les moyens individuels d'interface (13) comprennent au moins un coffret multifonction pour gérer des droits d'accès éventuels aux différents canaux de vidéocommunication et pour permettre au résident de sélectionner, par des moyens de télécommande associes audit coffret, l'un desdits canaux de vidéocommunication en fonction des droits d'accès détenus par le résident, notamment le canal de communication sélective.

7. Système domotique selon l'une des revendications 2 à 6, caractérisé en ce que les moyens de traitement d'information (5) sont reliés, via des moyens d'interface de communication externe et des moyens de liaison externe, des moyens distants (26) de contrôle et de traitement.

8. Système domotique selon la revendication 7, caractérisé en ce que lesdits moyens distants de contrôle et de traitement sont repartis en plusieurs postes de gestion délocalisée associés chacun à un ou plusieurs immeubles.

9. Système domotique selon la revendication 8, caractérisé en ce que les moyens de liaison externe mettent en oeuvre le réseau commuté.

10. Système domotique selon la revendication 9, caractérisé en ce que les moyens de liaison externe comprennent une liaison numérique (25) de type réseau numérique à intégration de service.

11. Procédé de communication d'informations au sein d'au moins un ensemble de logements, notamment un ou plusieurs immeubles d'habitat collectif (1), chaque logement (An, 50) étant relié à un réseau câble de télédistribution (20, 9) donnant accès à un nombre prédéterminé de canaux de vidéocommunication et étant équipé d'un poste récepteur (12) connecté audit réseau, mis en oeuvre dans le système domotique selon l'une des revendications 1 à 10, un desdits canaux de vidéocommunication étant dédié à la communication sélective d'informations aux résidents dans chaque logement depuis un poste central de gestion (CG), caractérisé en ce qu'il comprend des séquences de communication d'informations personnalisées aux résidents en réponse à une demande de ceux-ci et des séquences de transmission par chaque résident, d'informations, notamment de messages, sur le canal de vidéocommunication sélective, à destination du poste central de gestion.

12. Procédé de communication selon la revendication 11, caractérisé en ce que les informations personnalisées sont accessibles sur un poste récepteur préalablement adresse depuis le poste central de gestion (CG) à la condition de présenter, par lesdits moyens individuels de télécommande, un mot de passe.

13. Procédé de communication selon l'une des revendications 11 ou 12, caractérisé en ce que lesdites informations personnalisées comprennent des informations relatives à des données de comptage, notamment d'énergie et/ou de fluides fournis audit logement concerne (50), qui sont présentées sur l'écran du poste récepteur (12) équipant ce logement, sous la forme d'au moins un tableau de bord (TB) indiquant notamment au résident l'état des différents relevés de comptages d'énergie et/ou de fluides.

14. Procédé selon la revendication 13, caractérisé en ce qu'il comprend en outre au niveau du poste central de gestion (CG) une étape de calcul de facturation (CF) réalisée, suivant un calendrier prédéterminé, à partir des données de comptage préalablement acquises, et suivie d'une étape (FL) de communication personnalisée d'une facture correspondante à chaque logement via le canal de communication sélective.

15. Procédé selon l'une des revendications 11 à 14, caractérisé en ce que les informations personnalisées communiquées sont issues d'une étape de traitement préalable (TI) au niveau du poste central de gestion (CG), cette étape comprenant en outre une étape de saisie d'informations, entrées depuis le poste central de gestion, notamment de messages, suivie d'une étape de mise en forme desdites informations saisies avant une transmission sélective via le canal de communication sélective.

## FIG_1

FIG_2

FIG_3

FIG_4

FIG_5

FIG_6

Office européen
des brevets

# RAPPORT DE RECHERCHE EUROPEENNE

Numero de la demande

EP   92 40 0674

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | IEEE TRANSACTIONS ON CONSUMER ELECTRONICS vol. 34, no. 2, Mai 1988, NEW YORK, N. Y., US pages 327 - 333; R. HAMABE ET AL.: 'System Design for Super Home Bus System (S-HBS) for Appartment Building' | 1,11 | H04L12/28 |
| A | * le document en entier * | 2-10, 12-15 | |
| | --- | | |
| X | PROCEEDINGS OF LOCALNET '83 (EUROPE), LOCAL NETWORKS - STRATEGY AND SYSTEMS, ONLINE Mars 1988, LONDRES, GB pages 239 - 249; J. MATSUTIS ET AL.: 'COMNET: A Broadband, Voice, Video and Data Network for the Canadian House of Commons' | 1,11 | |
| A | * page 240, ligne 13 - page 242, ligne 13 * * page 248, ligne 44 - page 249, ligne 2 * | 2-10, 12-15 | |
| | --- | | |
| A | 'P. BRUN et al.: "La Domotique", 1re édition, octobre 1988, pages 40-43, Presses Universitaires de France, Paris, FR' * page 40, ligne 23 - page 42, ligne 34 * | 1-15 | |
| | --- | | **DOMAINES TECHNIQUES RECHERCHES (Int. Cl.5)** |
| A | IEEE COMMUNICATIONS MAGAZINE vol. 19, no. 1, Janvier 1981, NEW YORK, N. Y., US pages 36 - 42; R. KACHULAK: 'A Rural Integrated Distribution Trial with Fiber Optics' * page 38, colonne de droite, ligne 15 - page 40, colonne de droite, ligne 16; figure 2 * | 1-15 | H04L H04M |
| | ----- | | |

Le présent rapport a été établi pour toutes les revendications

| Lieu de la recherche | Date d'achèvement de la recherche | Examinateur |
|---|---|---|
| LA HAYE | 29 JUIN 1992 | MESSELKEN M. |

EPO FORM 1503 03.82 (P0402)

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant